(19) Europäisches Patentamt
European Patent Office
Office européen des brevets

(11) Veröffentlichungsnummer: **0 215 273**
**B1**

(12) # EUROPÄISCHE PATENTSCHRIFT

(45) Veröffentlichungstag der Patentschrift: **25.01.89**

(51) Int. Cl.⁴: **C 08 G 75/02**

(21) Anmeldenummer: **86110897.5**

(22) Anmeldetag: **06.08.86**

(54) **Verfahren zur Herstellung von hochmolekularen, gegebenenfalls verzweigten Polyarylensulfiden.**

(30) Priorität: **17.08.85 DE 3529500**

(43) Veröffentlichungstag der Anmeldung:
**25.03.87 Patentblatt 87/13**

(45) Bekanntmachung des Hinweises auf die Patenterteilung:
**25.01.89 Patentblatt 89/4**

(84) Benannte Vertragsstaaten:
**BE DE FR GB IT**

(56) Entgegenhaltungen:
**US-A-3 386 950**
**US-A-3 870 686**

(73) Patentinhaber: **BAYER AG, Konzernverwaltung RP Patentabteilung, D-5090 Leverkusen 1 Bayerwerk (DE)**

(72) Erfinder: **Ebert, Wolfgang, Dr., Dörperhofstrasse 31, D-4150 Krefeld (DE)**
Erfinder: **Idel, Karsten, Dr., Am Schwarzkamp 38, D-4150 Krefeld (DE)**
Erfinder: **Schubart, Rüdiger, Dr., An der Engelsfuhr 27, D-5060 Bergisch Gladbach 2 (DE)**

**EP 0 215 273 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zur Herstellung von hochmolekularen, gegebenenfalls verzweigten Polyarylensulfiden aus Alkalisulfiden und Dihalogenaromaten in einem polaren Lösungsmittel in Gegenwart von 0,05 bis 5,0 mol-%, bevorzugt 0,1 bis 2,5 mol-%, einer Monomercaptoverbindung. Die so erhaltenen Polyarylensulfide haben definierte Schmelzviskositäten und zeichnen sich durch eine hohe Stabilität der Schmelze und geringe Korrosion aus.

Polyarylensulfide und ihre Herstellung sind bekannt (siehe beispielsweise US-PS-2 513 188, 3 117 620, 3 354 129).

So ist bekannt, daß die Zugabe von anorganischen oder organischen Salzen zum Umsetzungsgemisch zur Erniedrigung des Schmelzflusses bzw. zur Erhöhung der Schmelzviskosität der gewonnenen Polyphenylensulfide beiträgt. Erst bei ausreichend hoher Schmelzviskosität können Polyphenylensulfide thermoplastisch, z. B. zu Spritzgußteilen, Folien und Fasern verarbeitet werden. Ohne Zugabe der obengenannten Salze werden Polyphenylsulfide gewonnen, die den notwendigen geringen Schmelzfluß erst über eine separate und zusätzliche Nachkondensation bzw. Härtung (Curing) erhalten.

Als Salze werden bekanntlich z. B. Alkalicarboxylate (DE-AS-2 453 749), Lithiumhalogenide oder Alkalicarboxylate (DE-OS-2 623 362), Lithiumchlorid oder Lithiumcarboxylat (DE-OS-2 623 363), Alkalicarbonate in Kombination mit Alkalicarboxylaten (US-PS-4 038 259), Lithiumacetat (DE-OS-2 623 333), Trialkaliphosphate (DE-OS-2 930 710), Trialkaliphosphonate (DE-OS-2 930 797), Alkalifluoride (DE-OS-3 019 732), Alkalisulfonate (US-PS-4 038 260), Lithiumcarbonat und Lithiumborat (US-PS-4 030 518) eingesetzt.

In der DE-OS-3 120 538 werden außerdem Polyarylensulfide mit hohen Schmelzviskositäten durch Zugabe von N,N-Dialkylcarbonsäureamiden zum Umsetzungsgemisch erhalten.

Die Verwendung von polaren Lösungsmitteln für die Herstellung von Polyarylensulfiden ist dort ebenfalls beschrieben.

Es wurde nun gefunden, daß durch Zugabe bestimmter Monomercaptoverbindungen zum Reaktionsgemisch Polyarylensulfide erhalten wurden, die reproduzierbar einstellbare Schmelzviskositäten besitzen und sich durch eine hohe Stabilität der Schmelze und geringe Korrosion bei der Verarbeitung auszeichnen. Gegenstand der Erfindung ist daher ein Verfahren zur Herstellung von gegebenenfalls verzweigten Polyarylensulfiden aus

a) 50 - 100 mol-% Dihalogenaromaten der Formel (I)

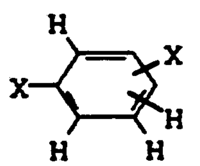

(I),

und 0 - 50 mol-% Dihalogenaromaten der Formel (II)

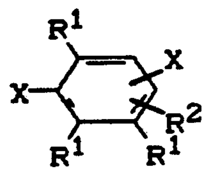

(II),

in denen

X für zueinander meta- oder para-ständiges Halogen wie Chlor oder Brom steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu 3 Heteroatome wie N, O, S enthaltenden Ring verknüpft sein können und immer ein Rest $R^1$ verschieden von Wasserstoff ist

und

b) 0 - 5 mol-%, bevorzugt 0,1 - 2,5 mol-%, bezogen auf die Summe der Dihalogenaromaten der Formel I und II, eines Tri- oder Tetrahalogenaromaten der Formel (III),

$ArX_n$ (III),

wobei

Ar ein aromatischer $C_6$-$C_{14}$-Rest oder ein heterocyclischer Rest mit 5 - 14 Ringatomen, wobei bis zu 3 Ring-C-Atome durch Heteroatome wie N,O,S ersetzt sein können, ist,

X für Halogen wie Chlor oder Brom steht und

n für die Zahl 3 oder 4 steht

und

c) 50 - 100 mol-% Alkalisulfid, bevorzugt Natrium- oder Kaliumsulfid oder deren Mischung, z. B. in Form ihrer Hydrate oder wäßrigen Mischungen, gegebenenfalls zusammen mit geringen Mengen Alkalihydroxiden wie Natrium- und Kaliumhydroxid, und 0 - 50 mol-% Alkalibisulfid, bevorzugt Natrium- und Kaliumhydrogensulfid oder deren Mischung, wobei das molare Verhältnis von (a+b) : c im Bereich von 0,75 : 1 bis 1,25 : 1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch 0,05 - 5,0 mol-%, vorzugsweise 0,1 bis 2,5 mol-% einer Monomercaptoverbindung der Formel IV zugegeben werden

$(R - A - S)_tW$ (IV),

in welcher

t fur die Zahl 1, 2 steht,

SW für eine Mercapto- oder Mercaptid-Gruppe steht,

W für Wasserstoff, ein Alkalimetall wie Li, Na, K oder $NH_4$ steht, und für den Fall, daß t für die Zahl 2 steht auch für ein Erdalkalimetall wie Mg, Ca, Ba oder Zn stehen kann,

A für einen $C_1$-$C_{30}$ aliphatischen, $C_6$-$C_{24}$ aromatischen oder einen bis zu drei Heteroatome wie N, O, S enthaltenden heterocyclischen Rest steht wie z. B.

$C_1$-$C_{18}$-Alkyliden, $-(CH_2)_p$ 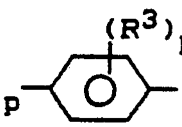 $(CH_2)_p-$, $C_6$-$C_{18}$-Cylcoalkyliden,

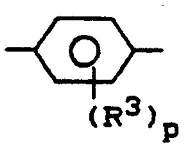 , 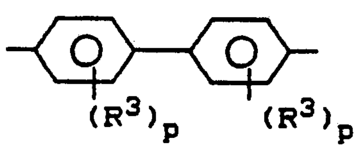 , 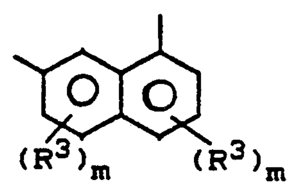 ,

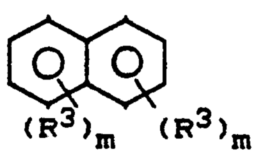 , 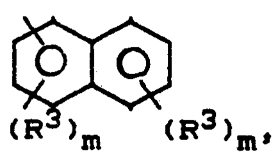 , 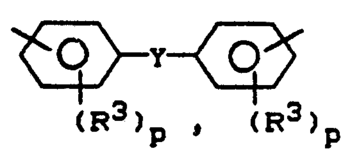 ,

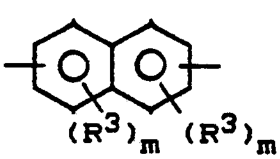

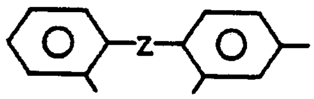

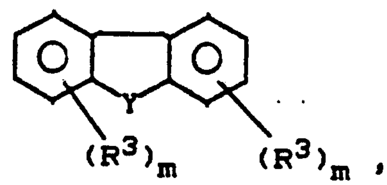

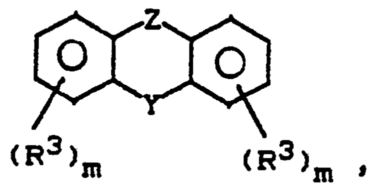

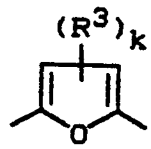

,

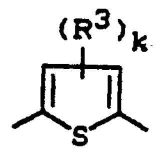

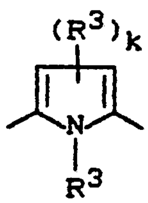

,

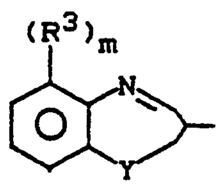

,

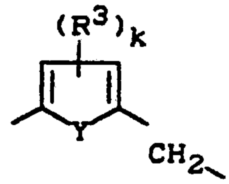

worin

die Reste $R^3$ unabhängig voneinander für $C_1$-$C_8$ Alkyl, Alkaryl/Aralkyl, $C_3$-$C_6$-Cycloalkyl oder Wasserstoff stehen und

Y für O, $NR^3$, S, $SO_2$ oder CO,

Z für $C_1$-$C_6$-Alkyliden, $C_2$-$C_6$-Cycloalkyliden, CO, -S-,

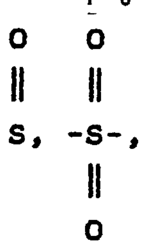

O oder eine einfache Bindung steht,

k für die Zahl 0, 1 oder 2

m für die Zahl 0, 1, 2 oder 3

p für die Zahl 0, 1, 2, 3 oder 4 steht

R die obengenannte Bedeutung von $R^3$ hat.

Das erfindungsgemäße Verfahren kann in verschiedener Weise durchgeführt werden.

Die Alkalisulfide werden vorzugsweise in Form ihrer Hydrate und wäßrigen Mischungen oder wäßrigen Lösungen eingesetzt. Die Entwässerung kann partiell sein, erfolgt aber vorzugsweise vollständig. Das im Umsetzungsgemisch vorhandene Wasser wird aus dem Ansatz destilliert. Die tropbildnern, wobei bevorzugt als Azeotropbildner die Dihalogenaromaten eingesetzt werden, erfolgen. Für die Entwässerung können alle Reaktionspartner gemischt und die Entwässerung des Gesamtgemisches durchgeführt werden. Das Alkalisulfid kann auch separat mit enem Teil der Reaktionskomponenten oder alleine entwässert werden.

In einer Ausführungsform der Reaktion werden die Reaktionspartner zusammen mit dem Reaktionsbeschleuniger bzw. einem Gemisch von Reaktionsbeschleunigern in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Diund Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden. Sie kann von 1 - 48 Stunden, bevorzugt 1 - 18 Stunden betragen. Die Reaktionstemperaturen liegen zwischen 150 und 300° C, vorzugsweise zwischen 170 und 280° C.

Die Zugabe der Monomercaptoverbindung der Formel IV kann vor oder während der Reaktion erfolgen.

Dabei können auch Gemische der Monomercaptoverbindunqen eingesetzt werden. Die Zugabe kann über Dosierung über bestimmten Zeiten des Reaktionsablaufes oder durch direkte Zugabe der berechneten Gesamtmenge zu einem definierten Zeitpunkt der Reaktion erfolgen.

Die erfindungsgemäß hergestellten Polyarylensulfide zeichnen sich durch definierte Schmelzviskositäten aus, die innerhalb eines engen Bereiches reproduziert werden können. Das ist insofern von großer Bedeutung, als zur Verarbeitung der Polyarylensulfide Polymerschmelzen mit unterschiedlichem Fließverfahren eingestellt werden müssen, die dem jeweiligen Verwendungszweck angepaßt sein müssen.

So kann über die Menge an zugegebenem Thiol die Schmelzviskosität beeinflußt werden. Dabei werden im allgemeinen bei Zugabe größerer Mengen an Thiolverbindungen niedrige Schmelzviskositäten erreicht werden. Bei Zugabe geringerer Mengen Thiolverbindungen können die Schmelzviskositäten erhöht werden.

So können zur Herstellung von Folien und Fasern höhere Schmelzviskositäten als zur Einstellung von Glasfaser bzw. Glasfaser/Mineralverstärkten Spritzgußtypen notwendig sein.

Ein weiterer Vorteil der erfindungsgemäß hergestellten Polyarylensulfide ist die größere Stabilität bei thermischer Belastung. Nur so ist gewährleistet, daß kein weiterer Auf- oder Abbau bei der thermoplastischen Verarbeitung, der zur vervollständigen Veränderung des Eigenschaftbildes führen kann, eintritt, und das Regenerat nach der Verarbeitung wieder neu eingesetzt werden kann.

Bei der thermoplastischen Verarbeitung oder bei Kontakt von PPS-Schmelzen mit Metalloberflächen wird im allgemeinen Korrosion beobachtet, die zur Verunreinigungen des PPS und zum Verschleiß von Verarbeitungsmaschinen führt. Bei den erfindungsgemäß hergestellten Polyarylensulfiden ist auch bei hoher thermischer Belastung diese Korrosion stark reduziert.

Die Aufarbeitung des Umsetzungsgemisches und die Isolierung der Polyarylensulfide können in bekannter Weise erfolgen.

Das Polyarylensulfid kann direkt aus der Reaktionslösung oder erst z. B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die Alkalisulfide können z. B. auch aus $H_2S$ und den Alkalihydroxiden bzw. aus den Hydrogensulfiden und Alkalihydroxiden erhalten werden.

Je nach Anteil an Alkalihydrogensulfid, das als Verunreinigung im Alkalisufid in der Reaktionslösung enthalten ist, können zusätzlich bestimmte Anteile Alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30 : 70 betragen.

Sollen verzweigte Polyarylensulfide hergestellt werden, sollten mindestens 0,05 mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortouol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol. 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3 - 11 C-Atomen, die gegebenenfalls Substituenten, die unter Reaktionsbedingungen inert sind, am Kohlenstoffgerüst tragen können.

Beispielweise finden als N-Alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Erfindungsgemäß einsetzbare Mercaptoverbindungen sind beispielsweise:

Butylmercaptan, Dodecylmercaptan, Stearylmercaptan, Benzylmercaptan, Thiophenol, 1-Mercaptonaphthalin, 2-Mercaptonaphthalin, 4-Mercaptodiphenyl, 4-Mercaptodiphenylether, 4-Mercaptodiphenylsulfon, 4-Mercaptodiphenylsulfid, 4-Mercaptodiphenylketon, 2-Mercaptobenzoxazol, 2-Mercaptobenzthiazol, 2-Mercaptobenzimidazol nebst deren Li-, Na-, K-, $NH_4$-, Ca-, Mg- oder Zn-Mercaptiden.

Vorzugsweise:

Stearylmercaptan, Dodecylmercaptan, Benzylmercaptan, Thiophenol, 2-Mercaptobenzimidazol, 2-Mercaptobenzthiazol, Na-Stearylmercaptid, Nathiophenolat, Na-2-Mercaptobenzimidazol, Na-2-Mercaptobenzthiazol, Zn-Salze des 2-Mercaptobenzimidazols und 2-Mercaptobenzthiazols.

Die Reaktion kann gegebenenfalls in Anwesenheit von übichen Reaktionsbeschleunigern wie z. B.:

Alkalicarboxylaten (DE-AS-2 453 749), Lithiumhalogeniden oder Alkalicarboxylaten (DE-OS-2 623 362), Lithiumchlorid oder Lithiumcarboxylat (DE-OS-2 623 363), Alkalicarbonaten in Kombination mit Alkalicarboxylaten (US-PS-4 038 259), Lithiumacetat (DE-OS-2 623 333), Trialkaliphosphaten (DE-OS-2 930 710), Trialkaliphosphonaten (DE-OS-2 930 797), Alkalifluoriden (DE-OS-3 019 732), Alkalisulfonaten (US-PS-4 038 260), Lithiumcarbonat und Lithiumborat (US-4 030 518), Aminosäuren (DE-OS-3 428 984), definierten Mengen Lactam (DE-OS-3 428 985), Anhydriden und Estern von Carbonsäuren (DE-OS-3 428 986) und N,N-Dialkylcarbonsäureamiden durchgeführt werden.

Die erfindungsgemäß hergestellten Polyarylensulfide können mit anderen Polymeren, wie Pigmenten und Füllstoffen - beispielsweise Graphit, Metallpulver, Glaspulver, Quarzmehl, Glasfasern oder Kohlefasern -, gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316°C unter Verwendung eines 5 kg Gewichtes gemessen und in g/10 min angegeben.

Bei hohen Schmelzflußwerten kann diese Mischung jedoch aufgrund der hohen Ausflußrate der Polymerschmelze Schwierigkeiten bereiten.

Es wurde deshalb die Schmelzviskosität $\eta$ m der Polymerschmelze (in Pa.s) bei 306°C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron; Durchmesser des Kegels und der Platte 2 cm. Angegeben wird die Schmelzviskosität, die bei einer Schubspannung von $\tau = 10^2$ Pa gemessen wird.

Die erfindungsgemäßen Polyarylensulfide besitzen nach der Isolierung aus dem Reaktionsgemisch Schmelzviskositäten zwischen 1 und 5 x $10^3$, vorzugsweise 5 bis 1 x $10^3$. Sie können in der üblichen Weise verarbeitet werden. Erhalten werden dabei Folien, Fasern und vorzugsweise Spritzgießmassen.

Diese können Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Atzbadschalen, Dichtungsringe, Teile von Büromaschinen und Fernmeldeeinrichtungen sowie Haushaltsgeräte, Ventile, Kugellagerteile, Einbettmassen für elektronische Bauteile etc.

Ebenso können Polyarylensulfide über chromatographische Verfahren analysiert werden, um Aussagen über

Molekulargewicht und Molekulargewichtsverteilung zu machen.

Hierfür sind z. B. Hochdruckflüssigkeitschromatographie (HPLC) oder Gelpermeationschromatographie (GPC) geeignet.

Als stationäre Phase können übliche Trägermaterialien verwendet werden, z. B. Li-Chroprep®, Lobar®, LiChrosorb®, LiChrospher®, Perisorb®, Hibar®, Fractogel®, Fractosil®, Ultrastyragel®, Microstyragel®, Zorbax®, Bondagel® und Shodex®.

Als Lösungsmittel und Laufmittel können übliche Lösungsmittel verwendet werden. Diese sollten das Polymere ausreichend lösen.

Z. B. sind 1-Chlornaphthalin, Diphenyl, N-Methylpyrrolidon, N-Cyclohexylpyrrolidon, N-Methylpiperidon, N-Methylcaprolactam, N-Methylaurinlactam, Sulfolan, N,N'-Dimethylimidazolidinon, N,N'-Dimethylpiperazinon, Hexamethylphosphorsäuretriamid, 1-Methyl-1-oxa-phospholan und deren Mischungen geeignet.

Bei den chromatographischen Analysemethoden können absolute oder relative Eichungen durchgeführt werden. Als Eichsubstanzen für relative eignen sich beispielsweise übliche Polymere wie z. B. Polystyrol, Polyethylen, Polyethylenterephthalat, Polybutylenterephthalat, Polyester, wie rein aromatische Polyester, Polycarbonat, Polyamide, wie PA 6, PA 66, PA 11, Polysulfone oder Polyethersulfone.

Die Chromatographie zur analytischen Bestimmung der Molekulargewichte bzw. Molekulargewichtsverteilung kann bei verschiedenen Drucken von 1 - 10 bar angewendet werden.

Die chromatographische Bestimmung wird bei einer Temperatur von Raumtemperatur bis 250°C durchgeführt. Weiterhin können zur Verbesserung der Meßgenauigkeit der zu analysierenden Probe Substanzen wie Alkalihalogenide, Erdalkalicarboxylate, Phosphonium- oder Ammoniumverbindungen zugesetzt werden.

Bei der Auswertung der so ermittelten Analysedaten können die gewichtsgemittelten Molekulargewichte $M_w$ angegeben werden. Diese betragen 15 000 - 150 000, vorzugsweise 15 000 - 100 000, besonders bevorzugt 15 000 - 80 000.

## Beispiele

### Beispiel 1

Dieses Beispiel beschreibt zum Vergleich die Herstellung von Polyphenylensulfid gemäß US-PS-3 354 129, wobei zur Erhöhung der Schmelzviskosität 1,2,4-Trichlorbenzol als Verzweiger zudosiert wird.

In einem mit Rührern ausgerüsteten Autoklaven wurden 129 g Natriumsulfid-tri-hydrat (entsprechend 1 mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (= 1 mol) und 1,81 g 1,2,4-Trichlorbenzol (1 mol-%, bezogen auf mol p-Dichlorbenzol) in ca. 50 g N-Methyl-2-pyrrolidon hinzugefügt. Man erwärmt das Reaktionsgemisch unter dem Stickstoffvordruck von 2,5 bar in 30 min auf 245°C, wobei der Druck auf 10 bar ansteigt, und hält diese Temperatur 3 Stunden. Nach Abkühlen der Raumtemperatur wird ein grauer Feststoff isoliert, der anschließend einer sorgfältigen Wasserwäsche zur Entfernung der anorganischen Beimengen unterworfen wird.

Man trocknet bei 80°C im Vakuum und erhält 100,3 g (93 %) Poly-p-phenylensulfid mit einer Schmelzviskosität von 20 Pa.s (gemessen bei $10^2$ Pa und 306°C).

### Beispiel 1 a, b, c

Der Versuch von Beispiel 1 wird dreimal wiederholt und jeweils die Schmelzviskosität nach Aufarbeitung bestimmt:

a) $\eta m$ = 13 Pa.s
b) $\eta m$ = 6 Pa.s
c) $\eta m$ = 27 Pa.s

Bei gleichbleibenden Versuchsbedingungen ergeben sich schwankende Schmelzviskositätswerte.

### Beispiel 2

Zu 2100 g N-Methylcaprolactam und 940,8 g p-Dichlorbenzol wurden

856,75 g Natriumsulfidhydrat (ca. 60-%-ig)

| | |
|---|---|
| 135 g | 2,5 %-ige Natronlauge und |
| 108 g | Caprolactam |

bei einer Temperatur von 220° C zudosiert.

Die Zudosierrate richtet sich nach dem Umsatz und wird so eingestellt, daß die Temperatur von 220°C bei gleichzeitiger zusätzlicher Beheizung des Reaktionsgefäßes eingehalten werden kann. Bei der Dosierung wird gleichzeitig das Wasser aus der Reaktion entfernt.

Nach der Dosierung hält man die Reaktion weitere 4 Stunden auf Rückfluß und dosiert dann 1,75 g (0,25 mol-%) Thiophenol in 50 ml N-Methylcaprolactam hinzu. Nach weiteren 3 Stunden Reaktionszeit wird das PPS in Wasser ausgefällt, elektrolytfrei gewaschen und mit einem organischen Lösungsmittel kurz extrahiert. Das getrocknete p-Polyphenylensulfid hat eine Schmelzviskosität von 75 Pa.s (gemessen bei $10^2$ Pa und 306° C).

**Beispiel 3 (Vergleich)**

Wie Beispiel 2, jedoch ohne Thiophenol. Es wird eine Schmelzviskosität η m von 680 Pa.s (gemessen bei $10^2$ Pa und 306°C) erreicht. Dieses Polyphenylensulfid läßt sich in Anwesenheit größerer Mengen mineralischer Füllstoffe oder Glasfasern aufgrund reduzierter Fließfähigkeit nur schwer verarbeiten.

**Beispeil 4**

Wie Beispiel 2; jedoch werden 10,68 g (1 mol-%) 2-Mercaptobenzthiazol nach 4 Stunden 30 min zudosiert. Das erhaltene p-Polyphenylensulfid hat eine Schmelzviskosität von 50 Pa.s (gemessen bei $10^2$ Pa und 306° C).

**Beispiel 5**

Wie Beispiel 2; jedoch mit Methyloxophospholan als Lösungsmittel. Es wird ein p-Polyphenylensulfid mit einer Schmelzviskosität von 45 Pa.s (gemessen bei $10^2$ Pa und 306° C) erhalten.

**Beispiel 6**

Wie Beispiel 4; jedoch wurden 4,51 g (0,35 mol-%) Dodecylmercaptan zugegeben. Es wird eine Schmelzviskosität von 55 Pa.s (gemessen bei $10^2$ Pa und 306° C) erhalten.

**Beispiel 7**

Der Versuch von Beispiel 2 wurde 5-mal wiederholt. Innerhalb kleiner Fehlerbreite wurde mit sehr guter Reproduzierbarkeit immer die gleiche Viskosität erhalten:

**Tabelle 1**

| | | | | |
|---|---|---|---|---|
| Muster 1 | η | m | = | 70 Pa.s (bei $10^2$ Pa und 306° C) |
| Muster 2 | η | m | = | 67 Pa.s |
| Muster 3 | η | m | = | 68 Pa.s |
| Muster 4 | η | m | = | 72 Pa.s |
| Muster 5 | η | m | = | 73 Pa.s |

**Beispiel 8**

Wie Beispiel 2; jedoch werden statt der Zugabe in der Nachkondensationszeit 1,75 g (0,25 mol-%) Thiophenol vorgelegt. Das nach der Aufarbeitung erhaltene Polyphenylensulfid hat eine Schmelzviskosität von η m = 80 Pa.s (bei τ = $10^2$ Pa und 306° C).

**Beispiel 9**

Wie Beispiel 7; jedoch werden 2,5 g (0,35 mol-%) Thiophenol vorgelegt. Das so erhaltene Polyphenylensulfid hat eine Schmelzenviskosität von $\eta$ m = 45 Pa.s (bei $\tau = 10^2$ Pa und 306° C).

**Beispiel 10**

Wie Beispiel 8; jedoch werden 10,68 g (1 mol-%) 2-Mercaptobenzthiazol vorgelegt. Damit erhält man ein Polyphenylensulfid mit einer Schmelzenviskosität von $\eta$ m = 75 Pa.s (bei $\tau = 10^2$ Pa und 306° C).

**Beispiel 11**

Wie Beispiel 8; jedoch werden 5,32 g (0,5 mol-%) 2-Mercaptobenzthiazol vorgelegt. Das so erhaltenen Polyphenylensulfid hat eine Schmelzviskosität von $\eta$ m = 140 Pa.s (bei $\tau = 10^2$ Pa und 306° C).

**Beispiel 12**

Wie Beispiel 7; jedoch wurde statt N-Methylcaprolactam mit N-Butylcaprolactam als Lösungsmittel gearbeitet. Das Polyphenylensulfid hat eine Schmelzviskosität von $\eta$ m = 38 Pa.s (bei $\tau = 10^2$ Pa und 306° C).

**Korrosion**

Die Korrosion wurde durch Titration mit einer normalen Natronlauge von sauren Ausgasungen, die durch Erhitzen der Polyphenylensulfidprobe im Luftstrom bei 350° C in 1 Stunde in einem Auffanggefäß mit Wasser erhalten wurden, bestimmt. Der Korrosionsfaktor $f = \frac{\text{Korrosion des entsprechenden Beispiels}}{\text{Korrosion des Vergleichsbeispiels 1}}$

**Tabelle 2**

| Beispiel | f |
|---|---|
| 2 | 0,91 |
| 4 | 0,90 |
| 5 | 0,87 |
| 6 | 0,85 |
| 8 | 0,95 |
| 9 | 0,81 |
| 10 | 0,89 |
| 11 | 0,90 |

**Stabilität der Schmelze**

Die Polyphenylensulfide aus Beispiel 1 (Vergleichsbeispiel) sowie Beispiel 7 Ansatz 1 - 5 wurden bei 300° C unter Luftausschluß aufgeschmolzen und 15 min bei dieser Temperatur gehalten. Anschließend wurde eine Probe der Schmelze am Rotationsviskosimeter bei $10^2$ Pa und 306° C vermessen. Diese Prozedur wurde mit dem minimal aufgeschmolzenen Material noch einmal wiederholt. Tabelle 3 zeigt, daß die erfindungsgemäß hergestellten Polyphenylensulfide im Vergleich zu dem nicht erfindungsgemäßen Vergleichsmaterial (Beispiel 1) eine hohe Stabilität der Schmelze besitzen:

| Vergleichsmaterial | η m* Ausgang | η m* 1. Schmelze | η m* 2. Schmelze |
|---|---|---|---|
| Beispiel 1 | 20 | 70 | 320 |
| Beispiel 7, Ansatz 1 | 51 | 55 | 61 |
| Beispiel 7, Ansatz 2 | 47 | 50 | 57 |
| Beispiel 7, Ansatz 3 | 46 | 50 | 58 |
| Beispiel 7, Ansatz 4 | 50 | 59 | 58 |
| Beispiel 7, Ansatz 5 | 46 | 49 | 55 |

* Schmelzviskosität η m gemessen in Pa.s bei $10^2$ Pa und 306° C

## Patentansprüche

1. Verfahren zur Herstellung von gegebenenfalls verzweigten Polyarylensulfiden aus

a) 50 - 100 mol-% Dihalogenaromaten der Formel

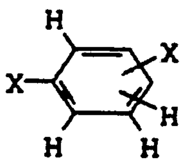

(I),

und 0 - 50 mol-% Dihalogenaromaten der Formel

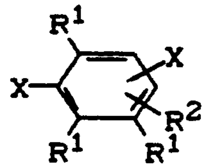

(II),

in denen

X für zueinander meta- oder para-ständiges Halogen steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu 3 Heteroatome wie N, O, S enthaltenden Ring verknüpft sein können und immer ein Rest $R^1$ verschieden von Wasserstoff ist

und

b) 0 - 5 mol-%, bevorzugt 0,1 - 2,5 mol-%, bezogen auf die Summe der Dihalogenaromaten der Formel I und II, eines Tri- oder Tetrahalogenaromaten der Formel

$ArX_n$ (III),

wobei

Ar ein aromatischer $C_6$-$C_{14}$-Rest oder ein heterocyclischer Rest mit 5 - 14 Ringatomen, wobei bis zu 3 Ring-C-Atome durch Heteroatome wie N, O, S ersetzt sein können, ist,

X für Halogen steht und

n fur die Zahl 3 oder 4 steht

und

c) 50 - 100 mol-% Alkalisulfid, bevorzugt Natrium- oder Kaliumsulfid oder deren Mischung, z. B. in Form ihrer Hydrate oder wäßrigen Mischungen, gegebenenfalls zusammen mit geringen Mengen Alkalihydroxiden wie Natrium- und Kaliumhydroxid, und 0 - 50 mol-% Alkalibisulfid, deren Mischung, wobei das molare Verhältnis von (a+b) : c im Bereich von 0,75 : 1 bis 1,25 : 1 liegen kann.

d) gegebenenfalls in Anwesenheit von Reaktionsbeschleunige rn wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch 0,05 - 5,0 mol-%, vorzugsweise 0,1 bis 2,5 mol-%, einer Monomercaptoverbindung der Formel IV zugegeben werden

$(R - A - S)_tW$ (IV),

in welcher
t für die Zahl 1, 2 steht,
SW für eine Mercapto- oder Mercaptid-Gruppe steht,
W für Wasserstoff, ein Alkalimetall oder Ammonium, steht, und für den Fall daß t für die Zahl 2 steht auch für ein Erdalkalimetall sowie auch Zn stehen kann,
A für einen $C_1$-$C_{30}$ aliphatischen, $C_6$-$C_{24}$ aromatischen oder einen bis zu drei Heteroatome wie N, O, S enthaltenden heterocyclischen Rest steht.

2. Verfahren nach Anspruch 1, dadurch gekennzeichnet daß die Formel IV einen W-Substituenten aus der Gruppe Li, Na, K oder $NH_4$ bzw. Mg, Ca, Ba oder Zn aufweist und einen A-Substituenten aus folgender Gruppe aufweist:

$C_1$-$C_{18}$-Alkyliden, 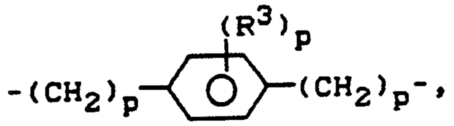, $C_6$-$C_{18}$-Cylcoalkyliden,

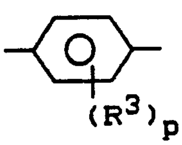 , 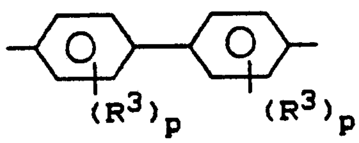 , 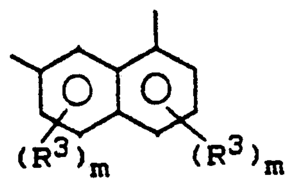,

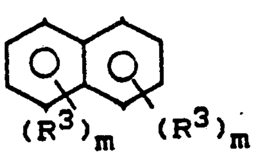 , 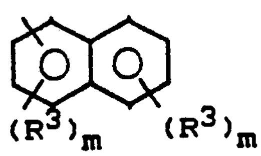, 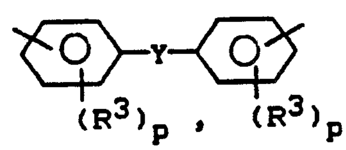,

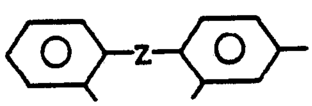 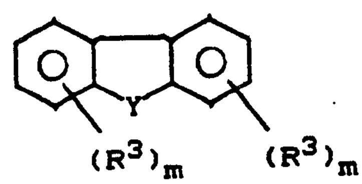 ,

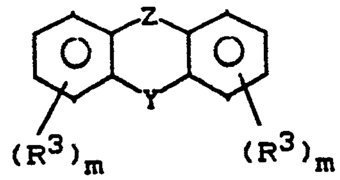,
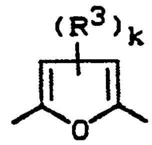,
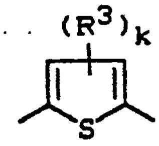

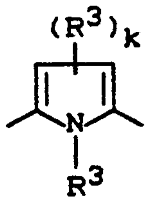,
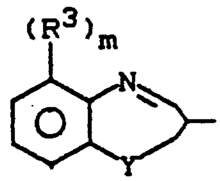,
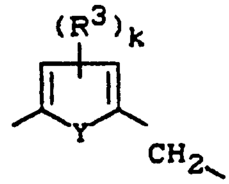

worin
die Reste $R^3$ unabhängig voneinander für $C_1$-$C_8$-Alkyl, Alkaryl/Aralkyl, $C_3$-$C_6$-Cycloalkyl oder Wasserstoff stehen und
Y für O, $NR^3$, S, $SO_2$ oder CO,
Z für $C_1$-$C_6$-Alkyliden, $C_2$-$C_6$-Cycloalkyliden, CO, -S-,

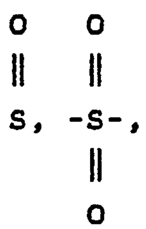
O oder eine einfache Bindung steht,

k für die Zahl 0, 1 oder 2
m für die Zahl 0, 1, 2 oder 3
p für die Zahl 0, 1, 2, oder 4 steht
R die obengenannte Bedeutung von $R^3$ hat.

3. Verfahren nach Anspruch 1, dadurch gekennzeichnet, daß die Reaktionspartner und das polare Lösungsmittel einzeln oder in Mischungen bzw. Lösungen bei Temperaturen $<200°C$ unter gleichzeitiger Entwässerung zusammengeführt und zur Reaktion gebracht werden.

4. Verfahren nach Anspruch 1, dadurch gekennzeichnet, daß die Reaktion in Abwesenheit von Wasser durchgeführt wird.

5. Verfahren nach Anspruch 1, dadurch gekennzeichnet, daß als Mercaptoverbindungen der Formel IV Thiophenol und/oder 2-Mercaptobenzthiazol und/oder 2-Mercaptobenzimidazol, n-Dodecylmercaptan eingesetzt weden.

6. Verfahren nach Anspruch 1, dadurch gekennzeichnet, daß die Reaktion druckarm oder druckfrei durchgeführt wird.

7. Verfahren nach Anspruch 1, dadurch gekennzeichnet, daß man N-Methyl-caprolactam als polares Lösungsmittel einsetzt.

## Claims

1. A process for the production of optionally branched polyarylenesulfides of
a) 50 to 100 mol-% aromatic dihalogen compounds corresponding to the formula

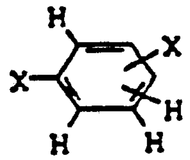

(I)

and 0 to 50 mol-% aromatic dihalogen compounds corresponding to the formula

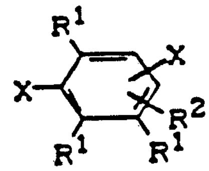

(II)

in which

X represents halogens in the meta or para position to one another and

$R^1$ and $R^2$ may be the same or different and represent hydrogen, $C_1$-$C_4$ alkyl, $C_5$-$C_{10}$ cycloalkyl, $C_6$-$C_{10}$ aryl, $C_7$-$C_{10}$ alkylaryl, $C_7$-$C_{14}$ arylalkyl; two substituents in the ortho position to one another may be attached to form an aromatic or heterocyclic ring containing up to 3 hetero atoms, such as N, O, S and one substituent $R^1$ is never hydrogen,

b) 0 to 5 mol-% and preferably 0.1 to 2.5 mol-%, based on the sum of the aromatic dihalogen compounds of formulae I and II, of an aromatic tri- or tetrahalogen compound corresponding to the formula

$ArX_n$ (III)

in which

Ar is an aromatic $C_6$-$C_{14}$ radical or a heterocyclic radical containing 5 to 14 ring atoms, up to 3 ring C atoms being replaceable by hetero atoms, such as N, O, S,

X is halogen and

n is the number 3 or 4

and

c) 50 to 100 mol-% alkali sulfide, preferably sodium or potassium sulfide or a mixture thereof, for example in the form of their hydrates or aqueous mixtures, optionally together with small quantities of alkali hydroxides, such as sodium and potassium hydroxide, and 0 to 50 mol-% alkali bisulfide, preferably sodium or potassium hydrogen sulfide or a mixture thereof, the molar ratio of (a+b) : c being from 0.75 : 1 to 1.25 : 1,

d) optionally in the presence of reaction accelerators, such as alkali carboxylates, alkali phosphates, alkali phosphonates, alkali fluorides, alkali alkyl sulfonates or in the presence of N,N-dialkylcarboxylic acid amides, lactams, anhydrides and esters of carboxylic acids,

characterized in that a monomercapto compound corresponding to formula IV

$(R - A - S)_tW$ (IV)

in which

t is the number 1 or 2,

SW is a mercapto or mercaptide group,

W is hydrogen, an alkali metal or ammonium and, where t is the number 2, may even represent an alkaline earth metal and also Zn,

A is a $C_1$-$C_{30}$ aliphatic, $C_6$-$C_{24}$ aromatic radical or a heterocyclic radical containing up to three hetero atoms, such as N, O, S,

is added to the reaction mixture in a quantity of from 0.05 to 5.0 mol-% and preferably in a quantity of from 0.1 to 2.5 mol-%.

2. A process as claimed in claim 1, characterized in that formula IV comprises a W substituent from the group comprising Li, Na, K or $NH_4$ or Mg, Ca, Ba or Zn and an A substituent from the following group: $C_1$-$C_{18}$ alkylidene,

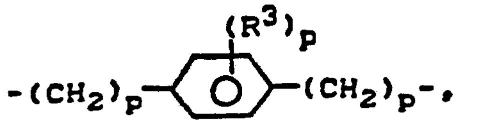 $C_6$-$C_{18}$ cycloalkylidene,

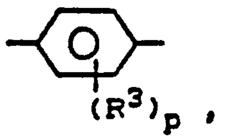 , 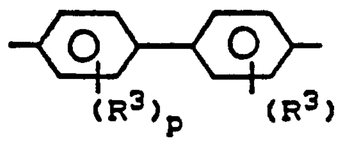 , 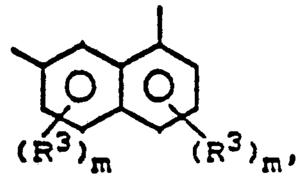 ,

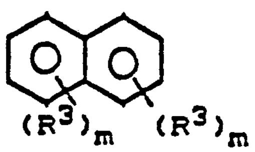 , 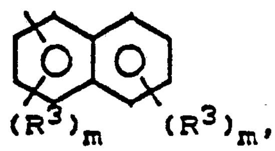 , 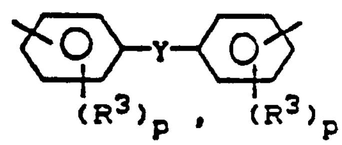 ,

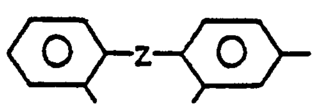 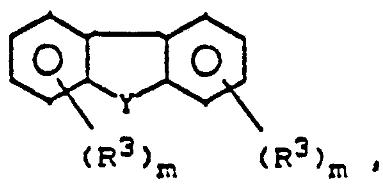 ,

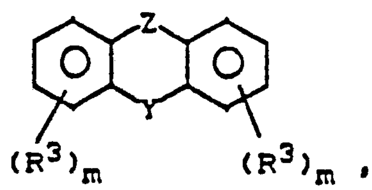 , 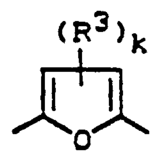 , 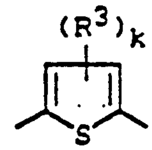

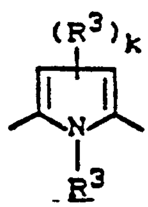 , 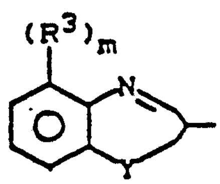 , 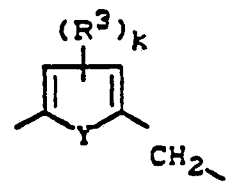

in which the substituents $R^3$ independently of one another represent $C_1$-$C_8$ alkyl, alkaryl/aralkyl, $C_3$-$C_6$ cycloalkyl or hydrogen and

Y represents O, $NR^3$, S, $SO_2$ or CO,

Z represents $C_1$-$C_6$ alkylidene, $C_2$-$C_6$ cycloalkylidene, SO,-S-,

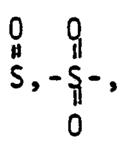 O or a single bond

k is the number 0, 1 or 2,

m is the number 0, 1, 2 or 3

p is the number 0, 1, 2 or 4 and

R has the meaning defined above for $R^3$.

3. A process as claimed in claim 1, characterized in that the reactants and the polar solvent are combined and reacted individually or in the form of mixtures or solutions at temperatures below 200°C with simultaneous removal of water.

4. A process as claimed in claim 1, characterized in that the reaction is carried out in the absence of water.

5. A process as claimed in claim 1, characterized in that thiophenol and/or 2-mercaptobenzthiazole and/or 2-mercaptobenzimidazole, n-dodecylmercaptan are used as the mercapto compounds of formula IV.

6. A process as claimed in claim 1, characterized in that the reaction is carried out under low pressure or in the absence of pressure.

7. A process as claimed in claim 1, characterized in that N-methylcaprolactam is used as the polar solvent.

**Revendications**

1. Procédé de préparation de poly(sulfures d'arylène, éventuellement ramifiés à partir de

a) 50 à 100 moles pour cent de composés aromatiques dihalogénés de formule

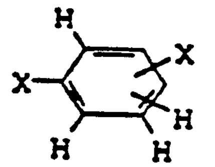

(I),

et 0 à 50 moles pour cent de composés aromatiques dihalogénés de formule

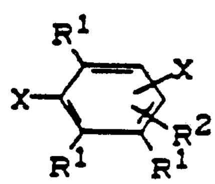

(II),

dans laquelle

X représente un atome d'halogène, les substituants halogènes étant en position mutuelle méta ou para et

$R^1$ et $R^2$ sont identiques ou différents et représentent chacun un atome d'hydrogène, un groupe alkyle en $C_1$-$C_4$, cycloalkyle en $C_5$-$C_{10}$, aryle $C_6$-$C_{10}$, alkylaryle en $C_7$-$C_{10}$, arylalkyle en $C_7$-$C_{14}$, deux restes $R^1$ en position ortho mutuelle pouvant être raccordés en un cycle ou noyau aromatique ou hétérocyclique contenant jusqu'à 3 hétéroatomes tels que N,O,S, un reste $R^1$ étant toujours différent de l'hydrogène

b) 0 à 5 moles pour cent, de préférence 0,1 à 2,5 moles pour cent, par rapport à la somme des composés aromatiques dihalogénés des formules I et II, d'un composé aromatique tri- ou tétrahalogéné de formule

$ArX_n$ (III)

dans laquelle

Ar représente un reste aromatique en $C_6$-$C_{14}$ ou un reste hétérocyclique comportant 5 à 14 atomes dans le noyau, jusqu'à 3 atomes de carbone du noyau pouvant être remplacés par des hétéroatomes tels que N, O, S,

X représente un atome d'halogène

n représente le nombre 3 ou 4

et

c) 50 à 100 moles pour cent de sulfure de métal alcalin, de préférence sulfure de sodium ou de potassium ou leur mélange, par exemple sous forme de leurs hydrates ou mélanges aqueux éventuellement avec de faibles quantités d'hydroxydes de métaux alcalins tels que l'hydroxyde de sodium et l'hydroxyde de potassium, et 0 à 50 moles pour cent de bisulfure de métal alcalin, de préférence le bisulfure ou hydrogénosulfure de sodium et l'hydrogénosulfure de potassium ou leur mélange, le rapport molaire de (a + b) : c pouvant se trouver dans l'intervalle de 0,75 : 1 à 1,25 : 1,

d) éventuellement en présence d'accélérateurs de réaction tels que les carboxylates de métaux alcalins, les phosphates de métaux alcalins, les phosphonates de métaux alcalins, les fluorures de métaux alcalins, les alkylsulfonates de métaux alcalins, respectivement en présence de N,N-dialkylcarboxamides, lactames, anhydrides et esters d'acides carboxyliques,

caractérisé en ce qu'on ajoute au mélange réactionnel 0,05 à 5,0 moles pour cent, de préférence 0,1 à 2,5

moles pour cent d'un composé monomercapto de formule IV

$(R - A - S)_t W$ (IV),

dans laquelle
t représente le nombre 1 ou 2,
SW représente un groupe mercapto ou mercaptide
W représente un atome d'hydrogène, un atome de metal alcalin ou un groupe ammonium et, au cas où t vaut 2 peut représenter egalement un atome de métal alcalino-terreux ainsi que de zinc,
A représente un reste aliphatique en $C_1$-$C_{30}$, aromatique en $C_6$-$C_{24}$ ou hétérocyclique contenant 1 à 3 hétéroatomes tels que N, O, S.

2. Procédé selon la revendication 1 caractérisé en ce que la formule IV présente un substituant W choisi parmi Li, Na, K, ou $NH_4$ respectivement Mg, Ca, Ba ou Zn et un substituant A choisi parmi les suivants:

alkylidène en $C_1$- $C_{18}$, $-(CH_2)_p$ 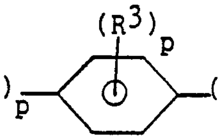 $-(CH_2)-$
cycloalkylidène en $C_6$ - $C_{18}$ ,

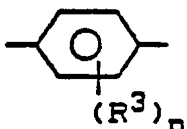 , 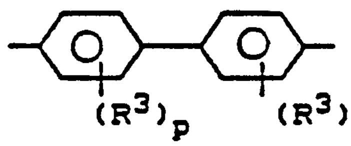 , 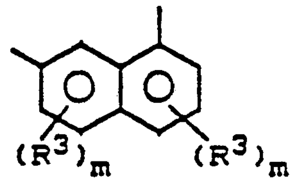 ,

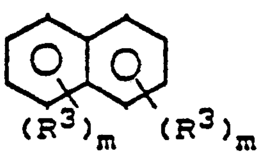 , 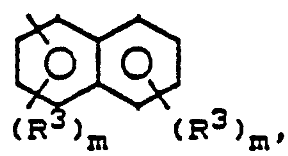 , 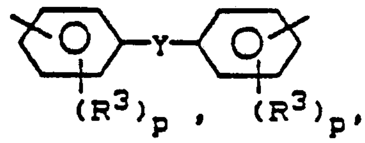 ,

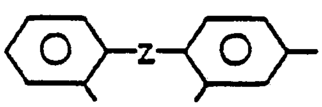 . 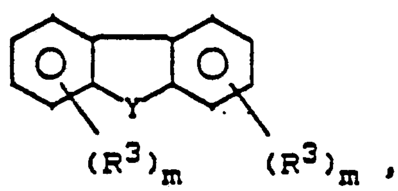 ,

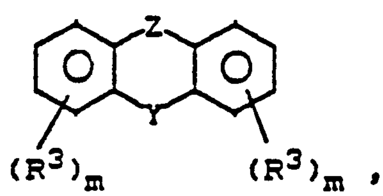 , 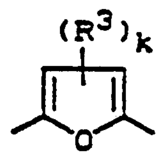 , 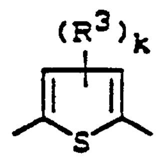

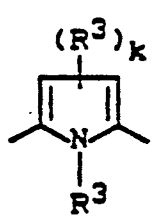 , 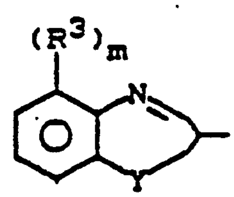 , 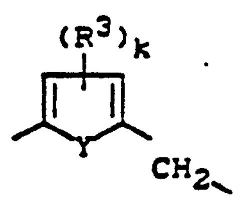

où les restes $R^3$ signifient indépendamment entre eux alkyle en $C_1$-$C_8$, alkaryle/aralkyle, cycloalkyle en $C_3$-$C_6$ ou l'hydrogène
Y représente O, $NR^3$, S, $SO_2$, ou CO
Z représente alkylidène en $C_1$-$C_6$, cycloalkylidène en $C_2$-$C_6$, CO, -S-,

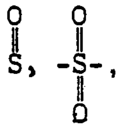 0 ou une simple liaison,

k représente le nombre 0, 1 ou 2
m représente le nombre 0, 1, 2 ou 3
p représente le nombre 0, 1, 2 ou 4
R a les significations attribuées ci-dessus à $R^3$.

3. Procédé selon la revendication 1, caractérisé en ce que les partenaires de réaction et le solvant polaire sont mis ensemble et mis en réaction individuellement ou en mélanges respectivement solutions à des températures inférieures à 200° C avec déshydratation simultanée.

4. Procédé selon la revendication 1, caractérisé en ce que la réaction est effectuée en l'absence d'eau.

5. Procédé selon la revendication 1, caractérisé en ce qu'on met en oeuvre le thiophénol et ou le 2-mercaptobenzothiazole et/ou le 2-mercaptobenzimidazole, ou le n-dodécylmercaptan en tant que composés mercapto de formule IV.

6. Procédé selon la revendication 1, caractérisé en ce que la réaction est effectuée à pression faible ou nulle.

7. Procédé selon la revendication 1, caractérisé en ce qu'on met en oeuvre le N-méthylcaproclactame comme solvant polaire.